# EUROPEAN PATENT SPECIFICATION

(11) **EP 0 816 832 B1**
(45) Date of publication and mention of the grant of the patent: **02.06.2004**
(21) Application number: 97304459.7
(22) Date of filing: 25.06.1997
(51) Int. Cl.: G01N 21/88, B60S 3/00, B60S 3/04

(54) **Method and apparatus for monitoring washing plant efficiency**
Verfahren und Vorrichtung zur Kontrolle der Leistungsfähigkeit einer Waschanlage
Procédé et dispositif de contrôle de l'efficacité d'une installation de lavage

(30) Priority: 27.06.1996 GB 9613522
(43) Date of publication of application: 07.01.1998
(73) Proprietor: Scientifics Limited, Derby DE24 8BQ (GB)
(72) Inventor: Savage, Stuart, Doncaster, Yorks (GB)
(74) Representative: Maury, Richard Philip

(56) References cited:
- EP-A- 0 285 436
- US-A- 3 976 586
- US-A- 4 532 066
- US-A- 5 033 489
- PATENT ABSTRACTS OF JAPAN vol. 010, no. 387 (P-530), 25 December 1986 & JP 61 175533 A (SEIDENSHA:KK), 7 August 1986,
- PATENT ABSTRACTS OF JAPAN vol. 095, no. 001, 28 February 1995 & JP 06 281584 A (FUJI ELECTRIC CO LTD), 7 October 1994,

## Description

### Field of the Invention

The present invention relates to an apparatus for and a method of monitoring the efficiency of cleaning machinery. It is particularly applicable, but in no way limited to, monitoring the efficiency of vehicle cleaning equipment, such as that used to wash the outside of railway rolling stock.

### Background to the Invention

Vehicle washing equipment is now used extensively in certain industries and there has been a long-felt need to monitor the effectiveness of this type of equipment. One example of this type of washing equipment is the equipment used to clean railway rolling stock. This highly specialised and technically advanced equipment is strategically located around the country and from time to time rolling stock is driven to and through it as part of an organised cleaning programme. This type of equipment is energy and water intensive and also uses a variety of cleaning chemicals which are both expensive and environmentally unfriendly if used in excess. It is therefore most important to monitor the efficiency of such a plant to avoid wasting any of these resources.

Historically, such plants were set up by the manufacturer according to their specifications, but monitoring their effectiveness over time tends to be an empirical process with one of the operators observing the overall cleanliness of trains emerging at the end of the cleaning line. This has a number of inherent disadvantages:
- It provides no reliable calibration method by which to monitor the effectiveness of the cleaning equipment over time.
- Trains must be put back into service promptly so even if some form of measurement were possible, this would lead to delays.
- The soil materials picked up by trains vary in a way which reflects their working environment, such as the area or industry in which they are used. The effectiveness of the cleaning plant in cleaning off specific types of dirt cannot currentiy be monitored.
- There is no method by which the performance against time can be monitored in order to implement the most cost-effective maintenance programme for a particular installation.

It is the object of the present invention to provide an apparatus for and a method of monitoring the efficiency of cleaning machinery which overcomes one or more of the problems outlined above.

### Summary of the Invention

According to a first aspect of the present invention, there is provided an apparatus suitable for monitoring the efficiency of vehicle cleaning equipment, said apparatus comprising a test panel adapted to be temporarily secured to the exterior of a vehicle whilst it passes through the cleaning equipment, as disclosed in JP 61,175,533 A; characterised in that a test surface of the test panel comprises a known dirt loading.

One or more such test panels can be fixed to any suitable region on the vehicle to be cleaned. The test panels are then removed from the vehicle as it exits the equipment and retained for later analysis.

Preferably the test panel is mounted in a holder incorporating a plurality of suction cups.

Using this type of holder, the test panel can be easily affixed to windows, doors or bodywork of the vehicle as required.

Preferably the test panel comprises a self-adhesive sheet adapted to adhere directly to the vehicle.

In a further preferred embodiment the test panel comprises a magnetic sheet adapted to adhere directly to the vehicle.

Use of magnetic material means that it is not absolutely essential to clean off that portion of the vehicle in order to get the test panel to adhere.

Preferably the test surface of the test panel is of uniform colour and reflectance, reflectance measurements taken before and after cleaning being used to determine the dirt loading remaining after cleaning and thus provide an index of the efficiency of the cleaning equipment.

Experimentation has shown that reflectance is a particularly appropriate and convenient measurement to use to follow the removal of dirt from a surface.

Preferably the test panel comprises a uniform composite material such as white DECAMEL ®.

Experimentation has also shown that this type of white laminate is a particularly suitable substrate for these test panels.

In a preferred embodiment the dirt loading comprises particulate material suspended in a gelling/emulsifying agent. This mixture mimics accummulated dirt which adheres to a vehicle over time. Preferably the particulate material is coloured or is black.

In a particularly preferred embodiment, the dirt loading comprises carbon black powder suspended in wallpaper paste or other suitable gelling agent, the mixture being applied evenly over the surface of the test panels and allowed to dry.

A very wide variety of dirt loadings such as grit, salt, grease amongst others can be suspended in wallpaper paste to simulate a variety of contaminants picked up by a vehicle during various operating conditions.

Preferably a portion of the test panel is left free from dirt loading as an internal calibration.

In a further aspect of the present invention, in its broadest sense, there is provided a method of monitoring the efficiency of vehicle cleaning equipment comprising the steps of:-
(a) providing one or more test panels adapted to be temporarily secured to the exterior of a vehicle;
(b) applying test soil to said one or more test panels in an even manner and allowing the said one or more test panels to dry;
(c) affixing the soiled one or more test panels to the exterior of a vehicle prior to its passage through the cleaning equipment;
(d) after the wash cycle is complete, removing the one or more test panels;
(e) draining and drying the one or more test panels;
(f) analysing the one or more test panels to determine the proportion of test soil removed by the cleaning process.

Preferably the test soil is prepared by mixing 10g of carbon black powder (e.g. Neo Spectra® MK II), 1g of non-PVA wallpaper paste dispersed in 200g water, and applying the resultant mixture by brush evenly over the surface of 16 test panels, each test panel being 420mm x 340mm in area.

In a preferred method, the test panels are analysed using a reflectometer once they have been removed from the vehicle.

### Brief Description of the Drawings

Embodiments of the present invention will now be more particularly described by way of example only, and with reference to the accompanying drawings in which:
Figure 1 is a plan view of a test panel holder;
Figure 2 shows a cross-section through the test panel holder of Figure 1;
Figure 3 shows a plan view of a test panel.

### Description of the Preferred Embodiments

The present embodiments represent currently the best ways known to the applicant of putting the invention into practice; but they are not the only ways in which this could be achieved. They are illustrated, and they will now be described, by way of example only.

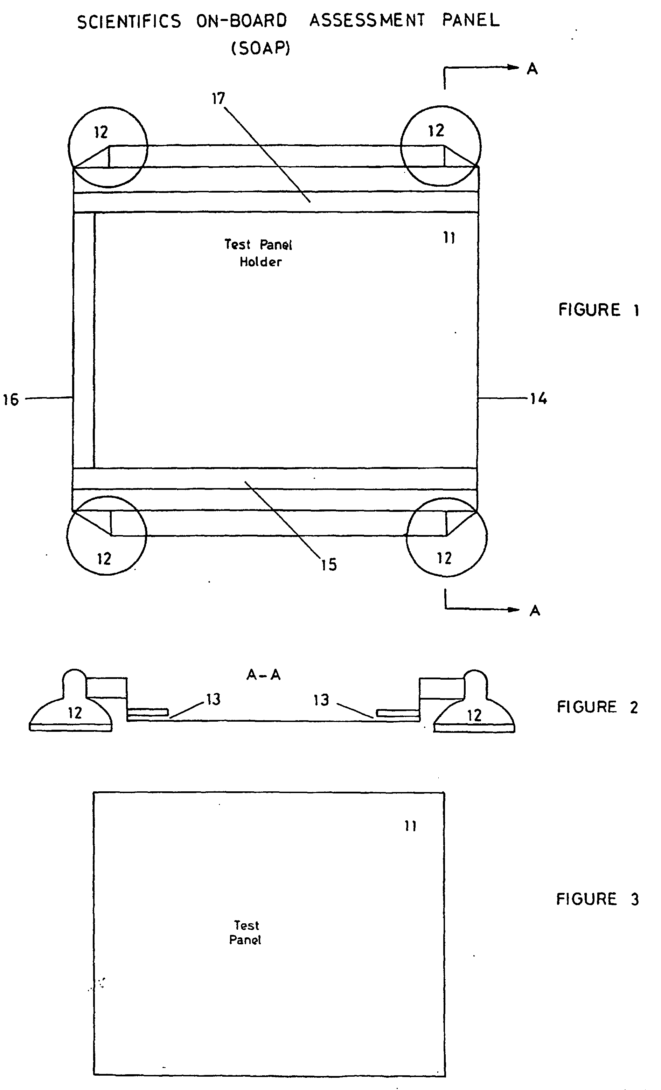

Figures 1 - 3 illustrate typical test panel apparatus comprising a holder shown in figures 1 and 2, and a test panel 11, shown in Figure 3. The holder comprises an aluminium framework 15, 16, 17 with backing plate 14, providing a rigid mounting into which a test panel 11 can be positioned. The framework is mounted onto two double cup, industrial quality suction cup lifters 12. The lever-operated suction cups are positioned at each corner. These suction cups are known per se from the glass-handling technology field and are routinely used to enable operators to lift sheets of glass, patio doors or the like. In this context, they are used to hold the holder in place on any smooth surface.

Thus, for example, by placing the holder against a train window and rotating the levers on each cup to create a vacuum, the holder becomes temporarily firmly fixed to the window glass.

This procedure works equally well on any relatively clean, smooth surface as found on the side of a train. The suction cup operating levers are provided with locking pins so that they do not become accidentally dislodged by the action of the cleaning equipment. The locking pins can take the form of an actual pin which is inserted into aligned holes or maybe a plastic clip or strap such as a "SECURITAB" ® which has to be removed before the suction cup can be released.

Recesses 13 are provided in the holder to accept the test panel 11 and this again is secured in place by clips, ties or any other convenient method. It is simply necessary to keep the test panel in place against the vigorous cleaning action of this type of machinery.

It will thus be appreciated that the apparatus provides a removable test panel which is readily and reversibly attached to a train or any other vehicle just prior to its passage through the deaning equipment whose performance is to be monitored. The test panel 11 can be slipped into place before or after the holder is fixed to the vehicle.

The composition of the test panel is an important feature of the invention. Some physical measurement is required to measure the effectiveness of the equipment, and it has been discovered that reflectance is a particularly appropriate property to measure. The reflectance of a particular surface is reduced by the presence of dirt on that surface.

It has been discovered that a white sheet made from the composite material DECAMEL ® is an ideal substrate. It is hard wearing and can be easily cleaned using commercial cleaners. Equally, it will accept a variety of test "soils" which can be applied in a variety of ways (see below). Most importantly, its surface behaves in a similar manner to painted metal and glass and thus it provides a good model for the exterior finishes found on rolling stock and other vehicles.

However, DECAMEL ® is only one type of suitable surface that can be used. In principle any even, light-coloured surface will suffice. Alternative plastics materials can be used or plastics or metals coated to give a finish similar to the finish on the item to be passed through the cleaning machinery.

Coupled with this particular type of material is a novel method of simulating various types of test dirt. It has been discovered that a suspension of Carbon Black in wallpaper paste is easily applied (see below) to these test panels and closely mimics the dirt found on trains. The use of wallpaper paste is not a prerequisite. Other thickeners and gelling agents such as polysaccharides can be used as required in a particular application. However, it will be appreciated that wallpaper paste is cheap, readily available and of consistent quality.

Where particular types of dirt are encountered, for example if the rolling stock is used in connection with a particular industrial environment, this too can be simulated in a similar way. Thus, salt, grease, chemicals, brake dust etc can all be incorporated into the emulsion prior to application to the test panel.

In principle a wide variety of dark or light coloured particulate material can be used to simmulate dirt loadings. This particulate material can be suspended in any suitable gel, gelling agent, emulsion or emulsifying agent and applied to the test panel. This invention is intended to encompass all possible soil loadings. The only requirement of the soil loading is that it can be applied to a test panel and that it will be removed in whole or in part during the washing process.

The apparatus and procedure will now be described in more detail.

### General Description

The technique involves three stages:
1. A special test panel is prepared in the laboratory under controlled conditions. This is transported to site and used between 4 and 72 hours after manufacture, in a carefully controlled way so as not to affect the surface of the test panel.
2. The test panel is affixed to the side of a vehicle and passed through a washing plant. The fixing method is developed in-house. The test panel and fixing device are removed and the test panel carefully transported back to the laboratory.
3. The test panel is assessed using a reflectometer to identify the dirt loading remaining on it and this is developed into an index measurement for the plant. Measurements can be taken at strategic points across the whole test panel and the measurements averaged.

### Operation of the Apparatus and Method

(a) Holder: This comprises an aluminium framework mounted onto two double cup, industrial quality suction lifters (see figure 1).
(b) Test Panels: These are cut from 3000mm x 1200mm (10' x 4') sheets of white DECAMEL ®. Each individual test panel measures 420mm x 340mm.
(c) Test Soil: This comprises a mixture of Neo Spectra® MKII Powder Carbon Black, non PVA wallpaper paste and distilled water, mechanically blended to an even consistency:
   5.0% Carbon Black
   0.5% Adhesive
   94.5% Water

### Preparation of Test Panels

1. Thoroughly clean the white,side of the test panel using a non-abrasive cream cleanser and 3M®'s "T" grade, white general purpose cleaning pad. Remove all traces of cream cleanser by rinsing with copious quantities of water. Ensure the back of the test panel is rinsed. Allow the test panels to dry naturally by standing on their ends and draining. Do not touch the cleaned surface.
2. Prepare the test soil. For up to 16 test panels weigh out 10g of Carbon Black, 1g of non-PVA wallpaper paste and add distilled water up to a total weight of 200g. Gently stir with a glass rod to disperse the ingredients and then immediately blend them together for one minute using a Braun® Multi-practice hand blender. Allow the test soil to stand for 30 minutes before use.
3. Lay a test panel on a flat surface and using a good quality, 50mm bristle paint brush apply the test soil. Load the brush and by gentle backward and forward strokes coat half the test panel. Re-load the brush and coat the other half of the test panel. Now turn the test panel through 90° and cross-brush the entire test panel. Rotate the test panel a further 90° and finish by brushing in one direction only ensuring an even appearance of the coated test panel. Allow the test panel to dry naturally. The test panels will normally be ready for testing after 4 hours and continue to be suitable for use up to 72 hours.
4. Indelibly mark the rear of the test panels with a unique identification number.
5. Carefully pack the test panels into individual plastic sacks to protect the prepared surfaces in transit.

This apparatus is referred to the Scientific On-Board Assembly Panel (SOAP) and its method of use on site is as follows:
1. Arrange for access to a vehicle that will pass through the wash plant/cleaning equipment.
2. Comply with all safety requirements.
3. Arrange the suitable access to the window level of the selected vehicle.
4. Wipe the window with paper towel to remove all dust and water.
5. Slide a pre-soiled test panel onto the test panel holder and secure via a cable tie.
6. Position the "loaded" holder on the window of the test vehicle and operate the suction cups.
7. Place locking rods through the holder to prevent accidental release of the suction mechanism. Secure the locking rods via cable ties.
8. Repeat for a window on the other side of the vehicle.
9. Arrange with the driver to pass through the wash plant at the prescribed speed. (Time the vehicle through the washer as a check).
10. After the wash cycle is complete, remove the test panel holders and test panels.
11. Repeat the process with two new pre-soiled test panels.
12. Carefully drain the used test panels, repack into their protective plastic sacks and return to the laboratory.

The following information may optionally be obtained (by direct measurement where possible or otherwise from records) in order to further evaluate the performance of the cleaning equipment:
1. The bodyside interference of the brushes or flails (lap).
   (a) Measure the diameter of the centre shaft of the rotor (brushes and flails).
   (b) Measure the distance from the centre shaft to the outside of the flail bobbin (Flail machines only).
   (c) Measure the length of brush fibres and flails. (Take several measurements at different heights).
2. Where possible (if machine can be operated manually), measure the rotor speed. This is only possible if water/chemical pump can be switched off to enable a "dry" run to be conducted.
3. Obtain an estimate of the test vehicle speed through the wash plant, i.e. time a vehicle between two fixed points.

In a variation, rather than coating the whole of the test panel, a portion can be left uncoated thus providing an internal calibration for that particular test panel. Thus, any wear in the particular test panel which would show up as a reduction in the reflectance can be allowed for.

This invention also provides for a variety of different means for temporarily fixing the test panel onto a vehicle. For example, the reverse side of the test panel can be provided with an adhesive backing which, once exposed, can be adhered to the vehicle. Alternatively, the test panel may take the form of a magnetic sheet or magnetic fixings can be applied to the rear of the test panel sheet. This will obviously be effective when applying the sheet to ferrous metal bodywork of a vehicle but will not enable the test panel to be applied to a window.

There has been no attempt that the applicant is aware of to undertake a similar test programme on cleaning equipment. This technique was developed through a thorough knowledge of vehicle washing. The method of soiling the test panels is unique, and the method of attachment to the vehicle is also unique. Bringing these together has produced a system which could revolutionise the relationship between machine owners/operators and their maintenance contractor/customers, allowing for the first time a reproducible evaluation of effectiveness.

It will be appreciated that this technology can be used in a wide variety of vehicle cleaning equipment. It is particularly appropriate, for example, to car washes where the occasional car could carry a test panel through the wash cycle.

It is importantly also applicable to non-vehicle systems. Such test panels could be used in production and process lines where a specific level of cleanliness is required in order to pass certain requirements. The test panels could be prepared to verify standards to allow for this with greases, oils etc or other types of materials.

## Claims

1. An apparatus suitable for monitoring the efficiency of vehicle cleaning equipment, said apparatus comprising a test panel (11) adapted to be temporariiy secured to the exterior of a vehicle whilst it passes through the cleaning equipment;
**characterised in that** a test surface of the test panel (11) comprises a known dirt loading.

2. An apparatus as claimed in Claim 1 further comprising a holder incorporating a plurality of suction cups (12), the test panel (11) being mounted in the holder.

3. An apparatus as claimed in Claim 1 wherein the test panel (11) comprises a self-adhesive sheet adapted to adhere directly to the vehicle.

4. An apparatus as claimed in Claim 1 wherein the test panel comprises a magnetic sheet adapted to adhere directly to the vehicle.

5. An apparatus according to any preceding claim in which the test surface of the test panel (11) is of uniform colour and reflectance, reflectance measurements taken before and after cleaning being used to determine the dirt loading remaining after cleaning and thus providing an index of the efficiency of the cleaning equipment.

6. An apparatus according to any preceding claim wherein the test panel (11) comprises a uniform composite material.

7. An apparatus according to any preceding claim wherein the dirt loading comprises carbon black powder suspended in wallpaper paste or other suitable gelling agent, the mixture being applied evenly over the surface of the test panel (11) and allowed to dry.

8. An apparatus according to any preceding claim wherein a portion of the test panel (11) is left free from dirt loading as an internal calibration.

9. A method of monitoring the efficiency of vehicle cleaning equipment comprising the steps of:-
(a) providing one or more test panels (11) adapted to be temporarily secured to the exterior of a vehicle;
(b) applying test soil to said one or more test panels (11) in an even manner and allowing the said one or more test panels to dry;
(c) affixing the soiled one or more test panels (11) to the exterior of a vehicle prior to its passage through the cleaning equipment;
(d) after the wash cycle is complete, removing the one or more test panels (11);
(e) draining and drying the one or more test panels (11);
(f) analysing the one or more test panels (11) to determine the proportion of test soil removed by the cleaning process.

10. A method according to Claim 9 wherein the test soil is prepared by mixing 10g of carbon black powder, 1g of non-PVA wallpaper paste dispersed in 200g water, and applying the resultant mixture by brush evenly over the surface of 16 test panels, each test panel being 420mm x 340mm in area.

11. A method according to Claim 9 or Claim 10 wherein the one or more test panels (11) are analysed using a reflectometer.

## Patentansprüche

1. Vorrichtung, die für die Kontrolle der Leistungsfähigkeit der Fahrzeugwaschanlage geeignet ist, wobei die Vorrichtung eine Testtafel (11) aufweist, die so ausgeführt ist, daß sie zeitweilig am Äußeren eines Fahrzeuges gesichert werden kann, während es durch die Waschanlage gelangt;
**dadurch gekennzeichnet, daß** eine Testfläche der Testtafel (11) eine bekannte Schmutzbelastung aufweist.

2. Vorrichtung nach Anspruch 1, die außerdem einen Halter aufweist, der eine Vielzahl von Saugbechern (12) enthält, wobei die Testtafel (11) im Halter montiert wird.

3. Vorrichtung nach Anspruch 1, bei der die Testtafel (11) eine Selbstklebefolie aufweist, die so ausgeführt ist, daß sie direkt am Fahrzeug haftet.

4. Vorrichtung nach Anspruch 1, bei der die Testtafel eine Magnetplatte aufweist, die so ausgeführt ist, daß sie direkt am Fahrzeug haftet.

5. Vorrichtung nach einem der vorhergehenden Ansprüche, bei der die Testfläche der Testtafel (11) eine gleichmäßige Farbe und Reflexion aufweist, wobei Reflexionsmessungen, die vor und nach dem Waschen vorgenommen werden, benutzt werden, um die Schmutzbelastung zu ermitteln, die nach dem Waschen verbleibt, und wodurch eine Kennziffer für die Leistungsfähigkeit der Waschanlage geliefert wird.

6. Vorrichtung nach einem der vorhergehenden Ansprüche, bei der die Testtafel (11) ein gleichmäßiges Verbundmaterial aufweist.

7. Vorrichtung nach einem der vorhergehenden Ansprüche, bei der die Schmutzbelastung Rußpulver aufweist, das in Tapetenkleister oder einem anderen geeigneten Gelatinierungsmittel aufgeschlämmt ist, wobei die Mischung gleichmäßig über die Fläche der Testtafel (11) aufgebracht wird und trocknen darf.

8. Vorrichtung nach einem der vorhergehenden Ansprüche, bei der ein Abschnitt der Testtafel (11) frei von einer Schmutzbelastung als eine innere Eichung belassen wird.

9. Verfahren zur Kontrolle der Leistungsfähigkeit der Fahrzeugwaschanlage, das die folgenden Schritte aufweist:
(a) Bereitstellen einer oder mehrerer Testtafeln (11), die so ausgeführt sind, daß sie zeitweilig am Äußeren eines Fahrzeuges gesichert werden;
(b) Aufbringen von Testschmutz auf die eine oder mehreren Testtafeln (11) in einer gleichmäßigen Weise und Zulassen, daß die eine oder mehreren Testtafeln trocknen;
(c) Befestigen der verschmutzten einen oder mehreren Testtafeln (11) am Äußeren eines Fahrzeuges vor dessen Durchgang durch die Waschanlage;
(d) Entfernen der einen oder mehreren Testtafeln (11) nach dem Abschluß des Waschzyklusses;
(e) Abtropfen lassen und Trocknen der einen oder mehreren Testtafeln (11);
(f) Analysieren der einen oder mehreren Testtafeln (11), um den Anteil des durch den Waschvorgang entfernten Testschmutzes zu ermitteln.

10. Verfahren nach Anspruch 9, bei dem der Testschmutz durch Mischen von 10 g Rußpulver, 1 g Tapetenkleister nicht auf PVA-Basis, dispergiert in 200 g Wasser, hergestellt wird und die resultierende Mischung mittels einer Bürste gleichmäßig über die Fläche der 16 Testtafeln aufgebracht wird, wobei jede Testtafel eine Fläche von 420 mm x 340 mm aufweist.

11. Verfahren nach Anspruch 9 oder Anspruch 10, bei dem die eine oder mehreren Testtafeln (11) bei Verwendung eines Reflektometers analysiert werden.

## Revendications

1. Dispositif destiné à surveiller l'efficacité d'une installation de nettoyage d'un véhicule, ledit dispositif comprenant un panneau de test (11) destiné à être fixé temporairement sur l'extérieur d'un véhicule lors de son passage à travers l'installation de nettoyage;
**caractérisé en ce qu'**une surface de test du panneau de test (11) comprend un chargement de saletés connues.

2. Dispositif selon la revendication 1, comprenant en outre un moyen de retenue incorporant plusieurs coupelles d'aspiration (12), le panneau de test (11) étant monté dans le moyen de retenue.

3. Dispositif selon la revendication 1, dans lequel le panneau de test (11) comprend une feuille auto-adhésive destinée à adhérer directement au véhicule.

4. Dispositif selon la revendication 1, dans lequel le panneau de test comprend une feuille magnétique destinée à adhérer directement au véhicule.

5. Dispositif selon l'une quelconque des revendications précédentes, dans lequel la surface de test du panneau de test (11) a une couleur et une réflectance uniformes, les mesures de la réflectance prises avant et après le nettoyage servant à déterminer le chargement de saletés résiduelles après le nettoyage et fournissant ainsi un indice de l'efficacité de l'installation de nettoyage.

6. Dispositif selon l'une quelconque des revendications précédentes, dans lequel le panneau de test (11) comprend un matériau composite uniforme.

7. Dispositif selon l'une quelconque des revendications précédentes, dans lequel le chargement de saletés comprend une poudre de noir de carbone suspendue dans une pâte de papier peint ou un autre agent gélifiant approprié, le mélange étant appliqué de manière régulière au-dessus de la surface du panneau de test (11) et séché.

8. Dispositif selon l'une quelconque des revendications précédentes, dans lequel une partie du panneau de test (11) reste exempte de chargement de saletés, établissant un calibrage interne.

9. Procédé de surveillance de l'efficacité d'une installation de nettoyage d'un véhicule, comprenant les étapes ci-dessous:
(a) fourniture d'un ou de plusieurs panneaux de test (11) destinés à être fixés temporairement sur l'extérieur d'un véhicule;
(b) application de salissures de test sur ledit un ou lesdits plusieurs panneaux de test (11), de manière régulière, et séchage desdits un ou plusieurs panneaux de test;
(c) fixation desdits un ou plusieurs panneaux de test salis (11) sur l'extérieur d'un véhicule avant son passage à travers l'installation de nettoyage;
(d) retrait desdits un ou plusieurs panneaux de test (11) après l'achèvement du cycle de lavage;
(e) drainage et séchage desdits un ou plusieurs panneaux de test (11);
(f) analyse desdits un ou plusieurs panneaux de test (11) pour déterminer la proportion de salissures de test éliminée par le procédé de nettoyage.

10. Procédé selon la revendication 9, dans lequel les salissures de test sont préparées en mélangeant 10 g de poudre de noir de carbone, 1 g de pâte de papier peint exempte de PVA dispersée dans 200 g d'eau, le mélange résultant étant appliqué de manière régulière par l'intermédiaire d'une brosse au-dessus de la surface de 16 panneaux de test, chaque panneau de test ayant une surface de 420 mm x 340 mm.

11. Procédé selon les revendications 9 ou 10, dans lequel ledit un ou lesdits plusieurs panneaux de test (11) sont analysés par l'intermédiaire d'un réflectomètre.
